Europäisches Patentamt

(19) **European Patent Office**

**Office européen des brevets**

(11) Numéro de publication: **0 053 985**
**B1**

(12) **FASCICULE DE BREVET EUROPEEN**

(45) Date de publication du fascicule du brevet:
21.11.84

(21) Numéro de dépôt: 81401955.0

(22) Date de dépôt: 08.12.81

(51) Int. Cl.³: **A 21 D 2/34,** A 21 D 2/26,
A 23 L 1/32

(54) **Produit alimentaire à haute efficacité nutritionnelle.**

(30) Priorité: **09.12.80 FR 8026089**

(43) Date de publication de la demande:
16.06.82 Bulletin 82/24

(45) Mention de la délivrance du brevet:
21.11.84 Bulletin 84/47

(84) Etats contractants désignés:
AT BE CH DE FR GB IT LI LU NL SE

(56) Documents cités:
FR - A - 599 977
FR - A - 1 339 649
FR - A - 2 051 291
FR - A - 2 352 498

(73) Titulaire: **LABORATOIRE LYORE, 13, Rue Faidherbe,
F-75011 Paris (FR)**

(72) Inventeur: **Chevalier, Jacques, 68 rue de la Charité,
F-69002 Lyon (FR)**
Inventeur: **Noel, Bernard, 24 rue Barbey d'Aurevilly,
F-50700 Valognes (FR)**

(74) Mandataire: **Phélip, Bruno et al, c/o Cabinet Harlé &
Phélip 21, rue de la Rochefoucauld, F-75009 Paris (FR)**

BUNDESDRUCKEREI BERLIN

## Description

L'invention concerne le domaine des produits alimentaires. Elle a pour objet un produit à haute efficacité nutritionnelle permettant de répondre aux besoins énergétiques d'organismes humains ou animaux soumis à des efforts pouvant être sévères. Dans un mode de réalisation particulièrement préféré, le nouveau produit est présenté sous forme de biscuit ou article analogue, ayant subi une cuisson dans des conditions contrôlées.

Les préparations nutritionnelles, dites »spécifiques de l'effort« sont très recherchées à l'heure actuelle. Elles sont par exemple destinées aux sportifs ainsi qu'aux personnes ayant de forts besoins énergétiques, telles que les jeunes et les convalescents. Ainsi, les travaux les plus récents en matière de médecine sportive, ont permis de mieux définir les besoins énergétiques des sportifs dans leur préparation à l'effort. La couverture des besoins énergétiques est considérée comme idéale lorsqu'elle est réalisée par des apports nutritionnells dont l'équilibre entre protides-lipides et hydrates de carbone se répartit sensiblement de la façon suivante:

— protiques:                   13%
— lipides:                     22%
— hydrates de carbone:         52%

(voir à ce sujet l'article de J. P de Montenar-Panorama du Médecin-Mai 1980).

Sous un aspect général, la présente invention a pour objet un produit alimentaire à haute efficacité nutritionnelle, dont la répartition de chacun des constituants (protides, lipides, glucides) varie dans les proportions ci-après:

— Protides:                       de 8 à 40%
— Lipides:                        de 5 à 30%
— Glucides ou hydrates de carbone:  de 25 à 70%

(les pourcentages étant indiqués pour 100 g de produit sec).

Sous un aspect préféré, l'invention concerne une composition alimentaire, dont l'équilibre énergétique correspond aux définitions des travaux récents développés en matière de médecine sportive.

Ainsi, l'invention concerne un produit alimentaire à haute efficacité nutritionnelle, contenant des protides, des lipides et des glucides ou hydrates de carbone dans les gammes pondérales respectives de 8 à 40% (protides); 5 à 30% (lipides)et 25 à 70% (glucides ou hydrates de carbone), caractérisé en ce que au moins 10% des protides sont apportés par des oeufs de caille et au moins 25% des protides sont apportés par des hydrolysats (ou autolysats) de protéines d'origine animale ou de fermentation.

Une composition particulièrement préférée selon l'invention est une composition contenant 13% de protides, 22% de lipides et 52% d'hydrates de carbone ou glucides et caractérisée en ce que au moins 10% des protides sont apportés par des oeufs de caille et au moins 25% des protides sont apportés par des hydrolysats (ou autolysats) de protéines, d'origine animale ou de fermentation.

D'autres compositions préférées de l'invention sont celles dans lesquelles les rapports pondéraux des protides, lipides et glucides sont de 24,6 et 52% ou de 34,12 et 40%, la composition des protides étant telle que définie précédemment. Selon l'invention les composants du produit alimentaire ont aussi pour caractéristiques:

— les lipides comprennent au moins 30% d'acides gras insaturés ou polyinsaturés, de préférence au moins 40%,
— des glucides ou les hydrates de carbone sont essentiellement constitués d'une combinaison de sucres à assimilation rapide et de sucres à assimilation lente; en particulier les glucides, ou hydrates de carbone sont répartis sensiblement par moitié entre sucres lents et sucres rapides. Dans une réalisation préférée de l'invention, la teneur en matières cellulosiques est comprise entre 4 et 7% en poids de la composition totale

Selon une caractéristique de l'invention, au moins 10% des protides sont apportés par des oeufs de caille dont on sait qu'à poids égal, la valeur nutritionnelle est nettement plus élevée que celle de l'oeuf de poule. Les oeufs de caille contiennent en effet cinq fois plus de phosphore, quinze fois plus de vitamine B 2 que les oeufs de poule. D'autre part, les ovomucoïdes des oeufs de cailles ont la particularité d'inhiber la trypsine humaine, et cette propriété permet d'identifier leur présence dans le produit de l'invention et de caractériser ainsi celuici. En général 10 à 15% des protides sont apportés par des oeufs de caille dans le produit de l'invention. La forme d'incorporation des oeufs de caille dans le produit n'est pas critique. On peut utiliser toutes les formes disponibles d'oeufs de caille, frais, congelés ou en poudre.

Selon une autre caractéristique de l'invention, au moins 25% des protides sont constitués par des hydrolysats ou autolysats de protéines d'origine animale ou de fermentation, par exemple des hydrolysats de poisson de mer ou des hydrolysats de levure. On utilise avantageusement des hydrolysats de protéines animales stabilisés avec un produit à base de lait. Lorsque l'on utilise des hydrolysats ou autolysats de protéines associés et stabilisés avec un produit à base de lait, les quantités appropriées sont avantageusement d'au moins 40% de la composition selon l'invention.

La valeur nutritionnelle des hydrolysats ou autolysats, notamment de poissons de mer, est bien connue (voir par exemple M. AUTRET — L'Alimentation et la vie — 1978 — 66 n°1). Pour les besoins de l'invention, on utilise avantageusement des hydrolysats stabilisés de protéines animales. De tels constituants peuvent être obtenus par des techniques classiques, de préférence par autolyse ou par digestion enzymatique. Les hydrolysats mis en oeuvre peuvent être de toute origine animale, tels que des hydrolysats de poissons, de pancréas, de sang, de lactoprotéines et autres constituants analogues. On met de préférence en oeuvre, selon l'invention, un hydrolysat de protéines de ce type, stabilisé conformément au procédé objet de la demande de brevet français n° 80 02 279 du 1er février 1980 publié sous le n° 24 74 827, ayant pour titre »Procédé pour l'obtention d'hydrolysats stabilisés de protéines animales, produits obtenus et application diététique et thérapeutique«. Le procédé décrit dans cette demande consiste à mélanger intimement un hydrolysat de protéines animales avec un produit á base de lait, et à sècher le mélange résultant de manière que la température du mélange ne dépasse pas 65° C environ. A titre de produit à base de lait on peut faire appel au lait entier ou écrémé, concentré ou non, ou à des rétentats d'ultrafiltration du lait et autres produits analogues obtenus à partir du lait. Si nécessaire, l'homme de l'art pourra se reporter à la description de la demande de brevet français 24 74 827 précitée, qui est incorporée par référence dans la présente demande de brevet. Les hydrolysats de protéines animales ainsi stabilisés conservent intactes toutes les valeurs nutritionnelles de l'hydrolysat de protéines de départ. Il est préféré, pour les besoins de la présente invention; d'utiliser un autolysat de protéines du type poissons de mer, stabilisé par du lait écrémé.

Selon une autre caractéristique du produit de l'invention, les matières grasses ou lipides sont exclusivement apportées sous une forme riche en acides gras insaturés ou polyinsaturés. On a constaté qu'une proportion d'au moins 30% était nécessaire de préférence d'au moins 40% d'acides gras insaturés ou polyinsaturés dans les lipides totaux et favorisait le métabolisme digestif des aliments et ménageait le système cardiovasculaire. Ces matières grasses peuvent être d'origines végétales telles que l'huile de tournesol ou d'origines animales en particulier apportées par un autolysat de poissons de mer choisis parmi les espèces particulièrement riches en acides gras insaturés à longue chaîne (E. H. GRUGER, R. W. NELSON et M. E. STANSLY 1964 I. Animal Oil Chemical Soc. 41.662.667)(ACKMAN R. G. et R. D. BURGHER 165 I. Animal Oil-Chem. Soc. 42.38.42).

Selon encore une autre caractéristique du produit de l'invention, la composition des hydrates de carbone est une combinaison harmonieuse entre sucres lents et sucres rapides, de façon à obtenir une efficacité glycémique prolongée pendant et après l'effort. Les proportions entre sucres rapides (galactose) et sucres lents (amidons), peuvent être par exemple voisines de 50-50. Parmi les sucres à digestion rapide, on peut citer les suivants ou leurs mélanges: fructose, saccharose, lévulose, lactose. Le galactose est un sucre intermédiaire et les sucres lents sont apportés par les amidons ou glutens de céréales ainsi que par les féculents.

Le produit selon l'invention peut contenir des matières cellulosiques, dont la teneur est avantageusement comprise entre 4 et 7% en poids de la composition totale. On a constaté en effet que cette teneur favorisait le péristaltisme intestinal et conduisait ainsi à une assimilation améliorée.

On a énuméré précédemment les caractéristiques essentielles de la composition du nouveau produit alimentaire. Il apparaîtra à l'homme de l'art que de mombreuses variantes peuvent être réalisées, en particulier selon la nature et l'origine des constituants de départ. Pour ce qui concerne par exemple les protides, à côté des protides apportées par les oeufs de caille et par les hydrolysats de protéines stabilisés par un produit lacté, le produit de l'invention peut contenir des protéines provenant d'autres sources, par exemple des protéines de lait ou de lactosérum.

A titre de matières grasses, on peut utiliser des matières très diverses, d'origines végétales ou animales, dès lors que les lipides contenus dans ces matières possèdent au moins 30% d'acides gras insaturés ou polyinsaturés.

Il est avantageux que le produit de l'invention contienne des céréales telles que le blé, le maïs ou le riz, ce qui permet de le présenter sous forme de biscuit, de galette ou autre aliment de ce type, après cuisson appropriée. Il va sans dire que la consistance physique du mélange des composants du produit de l'invention variera fortement selon la nature des constituants de départ. Pour l'obtention d'un produit convenant aux besoins de l'invention, on malaxe ensemble les constituants individuels pour obtenir une pâte que peut ensuite être travaillée selon des techniques usuelles en boulangerie, en biscuiterie ou en patisserie.

Pour former des biscuits ou galettes, on préfère cuire la pâte à des températures modérées, ne dépassant pas 100° C et de préférence inférieures à 85° C. Après une telle cuisson modérée au four, le produit obtenu est déshydraté.

En variante, la pâte obtenue après mélange des composants est répartie sur une tôle plate ou dans des moules avant cuisson. Celle-ci s'effectue alors avec un chauffage modéré et dessiccation sous vide partiel, dans des conditions soigneusement contrôlées pour ne pas détériorer les constituants de départ. Par exemple, dans la pratique, on a constaté qu'il était favorable de ne pas dépasser une gamme de températures de cuisson de l'ordre de 65 à 85° C.

Sous une forme préférée, le produit de l'invention se présente sous forme de biscuits ou galettes unitaires de 20 à 40 g. Ces produits procurent un apport nutritionnel spécifique de l'effort. Ils sont particulièrement destinés aux sportifs, randonneurs, alpinistes et pour tous ceux qui pratiquent une activité sportive de compétition. De tels produits conviennent aussi à l'alimentation des jeunes, par exemple des écoliers. Ils peuvent ainsi constituer pour eux une nourriture matinale très énergétique, qui permet de pallier l'hypoglycémie bien connue en cas de nutrition matinale insuffisante. On adaptera la technique de fabrication à la nature de constituants de départ, de manière à obtenir un produit final possédant une bonne tenue physique et une palatabilité satisfaisante et pesant par exemple 20 à 40 g, par exemple 25 à 35 g.

Les produits de l'invention ainsi mis sous forme de biscuits ou galettes, peuvent subir des traitements complémentaires bien connus de l'homme de l'art dans le domaine de la biscuiterie. Par exemple, après cuisson, on peut appliquer sur les biscuits une pâte de fruit sans sucre ou les enrober de noix de caroube ou de tout autre composant aromatique. Les exemples ci-après illustreront de tels modes de réalisation.

## Exemple N° 1

On dose dans un mélangeur successivement les composants ci-après dans les proportions pondérales suivantes:

| | |
|---|---|
| — Farine de froment | 11% |
| — Fécule | 4% |
| — Farine de maïs | 12% |
| — Sucre semoule | 15% |
| — Poudre lait écrémé | 15% |
| — Autolysat sur base lactée | 14% |
| — Oeufs de caille | 15% |
| — Huile de tournesol | 14% |

on malaxe pour obtenir une pâte assez souple pendant environ 15 minutes. La pâte est laminée pour obtenir une épaisseur maximum de 35 mm, désoupée selon les formes désirées et mise au four à température maximum de 85°C pendant le temps nécessaire pour obtenir une dessiccation complète (moins de 8% d'humidité).

Après refroidissement, les biscuits obtenus sont tartinés de pâte ou de pulpe d'orange puis recouverts d'une mince pellicule de cacao. Ils sont ensuite conditionnés dans des barquettes individuelles sous vide.

## Exemple N° 2

On dose dans un mélangeur comme précédemment les composants suivants:

| | |
|---|---|
| — Farine de blé complet | 14% |
| — Germe de blé | 5% |
| — Farine de riz | 12% |
| — Miel | 5% |
| — Sucre | 10% |
| — Poudre de protéines de lait | 12% |
| — Autolysat sur lait écrémé | 14% |
| — Oeufs de cailles | 14% |
| — Margarine végétale | 14% |

On malaxe pendant 20 minutes puis on procède au laminage et à cuisson comme précédemment. L'enrobage de pâte de fruit à raison de 1/15ème du poids obtenu est réalisé avant conditionnement.

## Exemple N° 3

On dose séparément les composants ci-après dans les proportions pondérales suivantes:

| | |
|---|---|
| — Farine de riz | 13% |
| — Farine de blé complet | 16% |
| — Fécule | 10% |
| — Sucre semoule | 12% |

| | | |
|---|---|---|
| — | Autolysat sur base lactée | 20% |
| — | Poudre d'oeufs de cailles | 6% |
| — | Huile de tournesol | 3% |
| — | Lait écrémé | 20% |

On malaxe en humidifiant pour obtenir une pâte souple que l'on traite de la même façon que dans les exemples 1 et 2.

La composition sur sec du produit final est alors la suivante:

| | | |
|---|---|---|
| — | Protides | 24% |
| — | Lipides | 6% dont 50% des acides gras sont des acides gras essentiels |
| — | Glucides | 52% dont 26% en sucre à assimilation rapide. |

### Exemple N° 4

On dose comme précédemment les composants suivants:

| | | |
|---|---|---|
| — | Fécule | 10% |
| — | Farine de Froment | 10% |
| — | Farine de riz | 10% |
| — | Sucre | 9% |
| — | Autolysat sur lait écrémé | 20% |
| — | Hydrolysat de levure | 20% |
| — | Poudre d'oeufs de cailles | 15% |
| — | Huile de tournesol | 6% |

On procède comme en 3 pour obtenir un produit alimentaire ayant une composition sur sec suivante:

| | | |
|---|---|---|
| — | Protides | 34% |
| — | Lipides | 12% dont 50% des acides gras sont des acides gras essentiels |
| — | Glucides | 40% dont 20% en sucres à assimilation rapide. |

**Revendications pour les Etats contractants: BE, CH/LI, DE, FR, GB, IT, LU, NL, SE**

1. Produit alimentaire à haute efficacité nutritionnelle, contenant des protides, des lipides et des glucides ou hydrates de carbone dans les gammes pondérales respectives de 8 à 40% (protides), 5 à 30% (lipides) 25 à 70% (glucides ou hydrates de carbone), caractérisé en ce que au moins 10% des protides sont apportés par des oeufs de caille et au moins 25% des protides sont apportés par des hydrolysats (ou autolysats) de protéines, d'origine animale ou de fermentation, les lipides contiennent au moins 30% d'acides gras insaturés ou polyinsaturés et les glucides sont une combinaison de sucres à assimilation rapide et à assimilation lente.

2. Produit alimentaire selon la revendication 1, caractérisé en ce que les protéines, lipides et glucides ou hydrates de carbone sont dans les rapports pondéraux de 13, 22 et 52%.

3. Produit alimentaire selon la revendication 1, caractérisé en ce que les protides, lipides et glucides ou hydrates de carbone sont dans les rapports pondéraux de 24, 6 et 52%.

4. Produit alimentaire selon la revendication 1, caractérisé en ce que les protides, lipides et glucides ou hydrates de carbone sont dans les rapports pondéraux de 34, 12 et 40%.

5. Produit alimentaire selon l'une quelconque des revendications 1 à 5, caractérisés en ce que les hydrolysats de protéines sont associés et stabilisés avec un produit lacté.

6. Produit selon l'une quelconque des revendications 1 à 5, caractérisé en ce qu'il contient des matières cellulosiques en une quantité comprise entre 4 et 7% en poids de la composition totale.

7. Produit selon l'une quelconque des revendications 1 à 6, caractérisé en ce que 10 à 15% des protéïnes sont apportées par les oeufs de caille.

8. Produit selon l'une quelconque des revendications 1 à 7, caractérisé en ce que les oeufs de caille sont mis en oeuvre à l'état frais, congelé ou en poudre.

9. Produit selon l'une quelconque des revendications 1 à 8, caractérisé en ce que les hydrolysats ou autolysats de protéines dérivent de protéines animales, en particulier de poissons.

10. Produit selon l'une quelconque des revendications 1 à 9, caractérisé en ce que l'hydrolysat ou autolysat de protéines est stabilisé par un produit lacté, par un procédé consistant à mélanger intimement l'hydrolysat de protéines animales avec un produit à base de lait, par exemple du lait écrémé, et à sécher le mélange résultant de manière que la température du mélange ne dépasse pas 65°C.

11. Produit selon l'une quelconque des revendications 1 à 10, caractérisé en ce que les matières grasses sont d'origine végétale, telle que l'huile de tournesol, ou d'origine animale, en particulier à base d'hydrolysat de poisson choisis parmi les espèces riches en acides gras insaturés à longue chaîne.

12. Produit selon l'une quelconque des revendications 1 à 11, caractérisé en ce que la proportion entre sucres rapides et sucres lents est de l'ordre de 50-50.

13. Produit selon l'une quelconque des revendications 1 à 12, caractérisé en ce que les sucres rapides sont choisis parmi le fructose, le saccharose, le lévulose, le lactose ou leurs mélanges, le galactose étant un sucre intermédiaire et les sucres lents sont apportés par les amidons ou glutens de céréales ainsi que par les féculents.

14. Produit selon l'une quelconque des revendications 1 à 13, caractérisé en ce qu'il contient complémentairement des protéines provenant d'autres sources, telles que des protéines de lait ou de lactosérum.

15. Produit selon l'une quelconque des revendications 1 à 14, caractérisé en ce qu'il contient également des céréales telles que le blé, le maïs ou le riz.

16. Produit selon l'une quelconque des revendications 1 à 15, caractérisé en ce qu'il est présenté sous forme de biscuit ou galette.

17. Procédé pour l'obtention d'un produit selon la revendication 16, caractérisé en ce qu'on malaxe ensemble les constituants individuels jusqu'à obtention d'une pâte, et en ce qu'on cuit celle-ci à une température modérée ne dépassant pas 100°C et de préférence, inférieur à 85°C.

18. Procédé pour l'obtention d'un produit selon la revendication 17, caractérisé en ce qu'on malaxe ensemble les constituants individuels jusqu'à obtention d'une pâte, en ce qu'on répartit celle-ci sur une tôle ou dans des moules, et en ce qu'on réalise la cuisson par chauffage modéré et dessiccation sous vide partiel.

19. Produit obtenu par le procédé selon l'une des revendications 18 ou 19 en particulier des biscuits ou galettes de 20 à 40 g et notamment de 25 à 35 g.

**Revendications pour l'Etat contractant: AT**

1. Procédé de préparation d'un produit alimentaire à haute efficacité nutritionnelle, contenant de 8 à 40% de protides, 5 à 30% de lipides et 25 à 70% de glucides ou hydrates de carbone, caractérisé en ce qu'on mélange ces trois composants choisis de telle sorte qu'au moins 10% des protides soient apportées par des oeufs de caille, au moins 25% des protides soient apportés par des hydrolysats, ou autolysats, de protéines d'origine animale ou de fermentation, que les lipides contiennent au moins 30% d'acides gras mono ou polyinsaturés et que les glucides soient une combinaison de sucres á assimilation rapide ou lente.

2. Procédé de préparation selon la revendication 1 caractérisé en ce qu'après le mélange des constituants, on cuit la composition à une température comprise entre 65 et 85°C à pression normale ou sous un vide partiel pour obtenir un biscuit ou une galette.

3. Procédé selon l'une quelconque des revendications 1 ou 2, caractérisé en ce que les protéines, lipides, et glucides ou hydrates de carbone sont dans les rapports pondéraux de 13, 22 et 52%.

4. Procédé selon l'une des revendications 1 ou 2, caractérisé en ce que les protides, lipides et glucides ou hydrates de carbone sont dans les rapports pondéraux de 24, 6 et 52%.

5. Procédé selon l'une des revendications 1 ou 2, caractérise en ce que les protides, lipides et glucides ou hydrates de carbone sont dans les rapports pondéraux de 34, 12 et 40%.

6. Procédé selon l'une quelconque des revendications 1 à 5, caractérisé en ce que les hydrolysats de protéines sont associés et stabilisés avec un produit lacté.

7. Procédé selon l'une quelconque des revendications 1 à 6, caractérisé en ce qu'on ajoute au mélange des matières cellulosiques en une quantité comprise entre 4 et 7% en poids de la composition totale.

8. Procédé selon l'une quelconque des revendications 1 à 7 caractérisé en ce que 10 à 15% des protéines sont apportées par les oeufs de caille.

9. Procédé selon l'une quelconque des revendications 1 à 8, caractérisé en ce que les oeufs de caille sont mis en oeuvre à l'état frais, congelé ou en poudre.

10. Procédé selon l'une quelconque des revendications 1 à 9, caractérisé en ce que les hydrolysats ou autolysats de protéines dérivent de protéines animales, en particulier de poissons.

11. Procédé selon l'une quelconque des revendications 1 à 10, caractérisé en ce qu'on mélange intimement l'hydrolysat ou autolysat de protéines animales avec un produit à base de lait, par exemple du lait écrémé, et on sèche le mélange résultant de manière que la température du mélange ne dépasse pas 65°C.

12. Procédé selon l'une quelconque des revendications 1 à 11, caractérisé en ce qu'on mélange des matières grasses d'origine végétale, telle que l'huile de tournesol, ou d'origine animale, en particulier à base d'hydrolysat de poisson choisis parmi les espèces riches en acides gras insaturés à longue chaîne.

13. Procédé selon l'une quelconque des revendications 1 à 12, caractérisé en ce qu'on mélange les sucres rapides et sucres lents en quantités sensiblement équivalentes.

14. Procédé selon l'une quelconque des revendications 1 à 13, caractérisé en ce que les sucres rapides sont choisis parmi le fructose, le saccharose, le lévulose, le lactose ou leurs mélanges, le galactose étant un sucre intermédiaire et les sucres lents sont apportés par les amidons ou glutens de céréales ainsi que par les féculents.

15. Procédé selon l'une quelconque des revendications 1 à 14 caractérisé en ce qu'on ajoute complémentairement au mélange des protéines provenant d'autres sources, telles que des protéines de lait ou de lactosérum.

16. Procédé selon l'une quelconque des revendications 1 à 15, caractérisé en ce qu'on ajoute également au mélange des céréales telles que le blé, le maïs ou le riz.

17. Procédé de préparation selon les revendications 2 à 16 caractérisé en ce que les biscuits ou galettes ont de 20 à 40 g et notamment de 25 à 35 g.


**Patentansprüche für die Vertragsstaaten: BE, CH, DE, FR, GB, IT, LI, LU, NL, SE**

1. Nahrungsmittel mit hohem Nährwert, enthaltend Protide, Lipide und Glucide oder Kohlenhydrate in den jeweiligen Gewichtsteilen von 8 bis 40% (Protide), 5 bis 30% (Lipide), 25 bis 70% (Glucide oder Kohlenhydrate), dadurch gekennzeichnet, daß mindestens 10% der Protide durch Wachteleier und mindestens 25% der Protide durch Hydrolysate (oder Autolysate) von Proteinen tierischen Ursprungs oder Gärung beigesteuert werden, wobei die Lipide mindestens 30% ungesättigte oder polyungesättigte Fettsäuren enthalten und die Glucide eine Kombination aus schnell und langsam zu assimilierenden Zuckern sind.

2. Nahrungsmittel nach Anspruch 1, dadurch gekennzeichnet, daß die Protide, Lipide und Glucide oder Kohlenhydrate in Gewichtsverhältnissen von 13, 22 und 52% vorliegen.

3. Nahrungsmittel nach Anspruch 1, dadurch gekennzeichnet, daß die Protide, Lipide und Glucide oder Kohlenhydrate in Gewichtsverhältnissen von 24, 6 und 52% vorliegen.

4. Nahrungsmittel nach Anspruch 1, dadurch gekennzeichnet, daß die Protide, Lipide und Glucide oder Kohlenhydrate in Gewichtsverhältnissen von 34, 12 und 40% vorliegen.

5. Nahrungsmittel nach einem der Ansprüche 1 bis 4, dadurch gekennzeichnet, daß die Hydrolysate der Proteine mit einem Milchprodukt assoziiert und stabilisiert sind.

6. Produkt nach einem der Ansprüche 1 bis 5, dadurch gekennzeichnet, daß es Cellulosematerialien in einer Menge zwischen 4 und 7 Gew.-% der gesamten Zusammensetzung enthält.

7. Produkt nach einem der Ansprüche 1 bis 6, dadurch gekennzeichnet, daß 10 bis 15% der Proteine durch Wachteleier geliefert werden.

8. Produkt nach einem der Ansprüche 1 bis 7, dadurch gekennzeichnet, daß die Wachteleier in frischem Zustand, gefroren oder in Pulverform verwendet werden.

9. Produkt nach einem der Ansprüche 1 bis 8, dadurch gekennzeichnet, daß die Hydrolysate oder Autolysate von Proteinen von tierischen Proteinen, insbesondere solchen von Fischen, herrühren.

10. Produkt nach einem der Ansprüche 1 bis 9, dadurch gekennzeichnet, daß das Hydrolysat oder Autolysat von Proteinen durch ein Milchprodukt durch ein Verfahren stabilisiert ist, das darin besteht, daß man das Hydrolysat der tierischen Proteine mit einem Produkt auf Milchbasis, z. B. entrahmter Milch, innig mischt und die erhaltene Mischung in solcher Weise trocknet, daß die Temperatur der Mischung 65° C nicht übersteigt.

11. Produkt nach einem der Ansprüche 1 bis 10, dadurch gekennzeichnet, daß die Fettmaterialien von pflanzlichem Ursprung, wie Sonnenblumenöl, oder tierischem Ursprung, insbesondere auf der Basis von Fischhydrolysat, ausgewählt von Arten, die an ungesättigten langkettigen Fettsäuren reich sind, sind.

12. Produkt nach einem der Ansprüche 1 bis 11, dadurch gekennzeichnet, daß das Verhältnis zwischen den schnell und langsam zu assimilierenden Zuckern um 50-50 liegt.

13. Produkt nach einem der Ansprüche 1 bis 12, dadurch gekennzeichnet, daß die schnell zu assimilierenden Zucker ausgewählt sind von Fructose, Saccharose, Lävulose, Lactose oder deren Mischungen, wobei Galactose ein dazwischenliegender Zucker ist, und die langsam zu assimilierenden Zucker durch Stärken oder Glutene von Getreiden sowie durch Stärkegummis geliefert werden.

14. Produkt nach einem der Ansprüche 1 bis 13, dadurch gekennzeichnet, daß es zusätzlich aus anderen Quellen stammende Proteine, z. B. Proteine der Milch oder Molke, enthält.

15. Produkt nach einem der Ansprüche 1 bis 14, dadurch gekennzeichnet, daß es weiterhin Getreide, wie Weizen, Mais oder Reis, enthält.

16. Produkt nach einem der Ansprüche 1 bis 15, dadurch gekennzeichnet, daß es in Form eines Biskuits oder Kuchens vorliegt.

17. Verfahren zur Herstellung eines Produktes gemäß Anspruch 16, dadurch gekennzeichnet, daß man die einzelnen Bestandteile zu einem Teig verknetet, und diesen bei mäßiger Temperatur nicht über 100° C, vorzugsweise unter 85° C, bäckt.

18. Verfahren zur Herstellung eines Produktes nach Anspruch 17, dadurch gekennzeichnet, daß man die einzelnen Bestandteile zu einem Teig verknetet und diesen auf einem Backblech oder in Formen verteilt und das Backen durch mäßiges Erhitzen und Trocknen unter Teilvakuum durchführt.

19. Produkt, erhalten nach dem Verfahren nach einem der Ansprüche 18 oder 19, insbesondere als Biskuits oder Kuchen von 20 bis 40 g, vorzugsweise 25 bis 35 g.


**Patentansprüche für den Vertragstaat: AT**

1. Verfahren zur Herstellung eines Nahrungsmittels mit hohem Nährwert, enthaltend 8 bis 40% Protide, 5 bis 30% Lipide und 25 bis 70% Glucide oder Kohlenhydrate, dadurch gekennzeichnet, daß man diese drei Komponenten mischt, die in solcher Weise ausgewählt sind, daß mindestens 10% der Protide durch Wachteleier, mindestens 25% der Protide durch Hydrolysate oder Autolysate von Proteinen tierischen Ursprungs oder Gärung beigesteuert werden, wobei die Lipide mindestens 30% mono- oder poly-ungesättigte Fettsäuren enthalten und die Glucide eine Kombination schnell oder langsam zu assimilierender Zucker sind.

2. Herstellungsverfahren nach Anspruch 1, dadurch gekennzeichnet, daß man nach dem Mischen der Bestandteile die Zusammensetzung bei einer Temperatur zwischen 65 und 85°C bei normalem Druck oder Teilvakuum zur Herstellung eines Biskuits oder Kuchens bäckt.

3. Verfahren nach einem der Ansprüche 1 oder 2, dadurch gekennzeichnet, daß die Protide, Lipide und Glucide oder Kohlenhydrate in Gewichtsverhältnissen von 13, 22 und 52% vorliegen.

4. Verfahren nach einem der Ansprüche 1 oder 2, dadurch gekennzeichnet, daß die Protide, Lipide und Glucide oder Kohlenhydrate in Gewichtsverhältnissen von 24, 6 und 52% vorliegen.

5. Verfahren nach einem der Ansprüche 1 oder 2, dadurch gekennzeichnet, daß die Protide, Lipide und Glucide oder Kohlenhydate in Gewichtsverhältnissen von 34, 12 und 40% vorliegen.

6. Verfahren nach einem der Ansprüche 1 bis 5, dadurch gekennzeichnet, daß die Hydrolysate der Proteine mit einem Milchprodukt assoziiert und stabilisiert sind.

7. Verfahren nach einem der Ansprüche 1 bis 6, dadurch gekennzeichnet, daß man der Mischung Cellulocematerialien in einer Menge zwischen 4 und 7 Gew.-% der Gesamtzusammensetzung zufügt.

8. Verfahren nach einem der Ansprüche 1 bis 7, dadurch gekennzeichnet, daß 10 bis 15% der Proteine durch Wachteleier geliefert werden.

9. Verfahren nach einem der Ansprüche 1 bis 8, dadurch gekennzeichnet, daß die Wachteleier in frischem Zustand, gefroren oder in Pulverform verwendet werden.

10. Verfahren nach einem der Ansprüche 1 bis 9, dadurch gekennzeichnet, daß die Hydrolysate oder Autolysate der Proteine von tierischen Proteinen, insbesondere von Fischen, herrühren.

11. Verfahren nach einem der Ansprüche 1 bis 10, dadurch gekennzeichnet, daß man das Hydrolysat oder Autolysat der tierischen Proteine mit einem Produkt auf Milchbasis, z. B. entrahmter Milch, innig mischt und die erhaltene Mischung in solcher Weise trocknet, daß die Temperatur der Mischung 65°C nicht übersteigt.

12. Verfahren nach einem der Ansprüche 1 bis 11, dadurch gekennzeichnet, daß man Fettmaterialien pflanzlichen Ursprungs, wie Sonnenblumenöl, oder tierischen Ursprungs, insbesondere auf der Basis eines Fischhydrolysates, ausgewählt von den an ungesättigten langkettigen Fettsäuren reichen Arten, mischt.

13. Verfahren nach einem der Ansprüche 1 bis 12, dadurch gekennzeichnet, daß man schnell und langsam zu assimilierende Zucker in etwa äquivalenten Mengen mischt.

14. Verfahren nach einem der Ansprüche 1 bis 13, dadurch gekennzeichnet, daß die schnell zu assimilierenden Zucker ausgewählt sind von Fructose, Saccharose, Lävulose, Lactose oder deren Mischungen, wobei Galactose ein dazwischenliegender Zucker ist, und die langsam zu assimilierenden Zucker durch Stärken oder Glutene von Getreiden sowie durch Stärkegummis geliefert werden.

15. Verfahren nach einem der Ansprüche 1 bis 14, dadurch gekennzeichnet, daß man der Mischung zusätzlich aus anderen Quellen stammende Proteine, z. B. Proteine von Milcher oder Molke, zufügt.

16. Verfahren nach einem der Ansprüche 1 bis 15, dadurch gekennzeichnet, daß man der Mischung weiterhin Getreide, wie Weizen, Mais oder Reis, zufügt.

17. Herstellungsverfahren nach einem der Ansprüche 2 bis 16, dadurch gekennzeichnet, daß die Biskuits oder Kuchen ein Gewicht von 20 bis 40 g, insbesondere 25 bis 35 g, haben.


**Claims for the contracting States: BE, CH, DE, FR, GB, IT, LI, LU, NL, SE**

1. Foodstuff with high nutritional efficiency, containing proteins, lipids and glucides or carbohydrates in the respective weight ranges of 8 to 40% (proteins), 5 to 30% (lipids) and 25 to 70% (glucides or carbohydrates), characterised in that at least 10% of the proteins are provided by quail eggs and at least 25% of the proteins are provided by hydrolysates (or autolysates) of proteins of animal origin or from fermentation, the lipids contain at least 30% of unsaturated or polyunsaturated fatty acids and the glucides are a combination of rapidly assimilated sugars and slowly assimilated sugars.

2. Foodstuff according to Claim 1, characterised in that the proteins, lipids and glucides or carbohydrates are in the weight relations of 13, 22 and 52%.

3. Foodstuff according to Claim 1, characterised in that the proteins, lipids and glucides or carbohydrates are in the weight relations of 24, 6 and 52%.

4. Foodstuff according to Claim 1, characterised in that the proteins, lipids and glucides or carbohydrates are in the weight relations of 34, 12 and 40%.

5. Foodstuff according to any one of Claims 1 to 4, characterised in that the protein hydrolysates are combined and stabilised with a milk product.

6. Product according to any one of Claims 1 to 5, characterised in that it contains cellulosic matter in an amount of between 4 and 7% by weight of the total composition.

7. Product according to any one of Claims 1 to 6, characterised in that 10 to 15% of the proteins are provided by quail eggs.

8. Product according to any one of Claims 1 to 7 characterised in that the quail eggs are employed in a fresh state, frozen or powdered.

9. Product according to any one of Claims 1 to 8, characterised in that the protein hydrolysates or autolysates are derived from animal proteins, particularly from fish.

10. Product according to any one of Claims 1 to 9, characterised in that the protein hydrolysate or autolysate is stabilised with a milk product, by a process consisting in intimately mixing the hydrolysate of animal proteins with a milk-based product, for example skimmed milk, and drying the resultant mixture so that the temperature of the mixture does not exceed 65° C.

11. Product according to any one of Claims 1 to 10, characterised in that the fatty matter is of vegetable origin, such as sunflower oil, or of animal origin, particularly bases on a hydrolysate of fish chosen from the species rich in long-chain unsaturated fatty acids.

12. Product according to any one of Claims 1 to 11, characterised in that the relation between fast sugars and slow sugars is of the order of 50-50.

13. Product according to any one of Claims 1 to 12, characterised in that the fast sugars are chosen from fructose, sucrose, levulose, lactose or their mixtures, galactose being an intermediate sugar and the slow sugars are provided by starches or cereal glutens and by starchy substances.

14. Product according to any one of Claims 1 to 13, characterised in that it contains as a supplement proteins originating from other sources, such as milk proteins or milk serum proteins.

15. Product according to any one of Claims 1 to 14, characterised in that it also contains cereals such as wheat, maize or rice.

16. Product according to any one of Claims 1 to 15, characterised in that it is in the form of a biscuit or cake.

17. Process for obtaining a product according to Claim 16, characterised in that the individual components are kneaded together until a paste is obtained, and the latter is cooked at a moderate temperature not exceeding 100° C and preferably, below 85° C.

18. Process for obtaining a product according to Claim 17, characterised in that the individual components are kneaded together until a paste is obtained, and the latter is distributed on a metal sheet or into moulds and in that cooking is produced by moderate heating and drying under a partial vacuum.

19. Product obtained by the process according to either of Claims 18 or 19, in particular biscuits or cakes weighting from 20 to 40 g and particularly from 25 to 35 g.

**Claims for the contracting States: AT**

1. Process for preparing a foodstuff with high nutritional efficiency, containing from 8 to 40% of proteins, 5 to 30% of lipids and 25 to 70% of glucides or carbohydrates, characterised in that mixing is carried out of these three components chosen so that at least 10% of the proteins are provided by quail eggs, at least 25% of the proteins are provided by hydrolysates, or autolysates, of proteins of animal origin or from fermentation, that the lipids contain at least 30% of mono- or polyunsaturated fatty acids and that the glucides are a combination of rapidly or slowly assimilated sugars.

2. Preparation process according to Claim 1, characterised in that after the components are mixed, the composition is cooked at a temperature of between 65 and 85° C at normal pressure or under a partial vacuum to obtain a biscuit or a cake.

3. Process according to either of Claims 1 or 2, characterised in that the proteins, lipids and glucides or carbohydrates are in the weight relations of 13, 22 and 52%.

4. Process according to either of claims 1 or 2, characterised in that the proteins, lipids and glucides or carbohydrates are in the weight relations of 24, 6 and 52%.

5. Process according to either of Claims 1 or 2, characterised in that the proteins, lipids and glucides or carbohydrates are in the weight relations of 34, 12 and 40%.

6. Process according to any one of Claims 1 to 5, characterised in that the protein hydrolysates are combined and stabilised with a milk product.

7. Process according to any one of Claims 1 to 6, characterised in that cellulosic matter is added to the mixture in a quantity of between 4 and 7% by weight of the total composition.

8. Process according to any one of Claims 1 to 7, characterised in that 10 to 15% of the proteins are provided by quail eggs.

9. Process according to any one of Claims 1 to 8, characterised in that the quail eggs are employed in a fresh state, frozen or powdered.

10. Process according to any one of Claims 1 to 9, characterised in that the protein hydrolysates or autolysates are derived from animal proteins, particularly from fish.

11. Process according to any one of Claims 1 to 10, characterised in that the animal protein hydrolysate or autolysate is intimately mixed with a milk-based product, for example skimmed milk, and the resultant mixture is dried so that the temperature of the mixture does not exceed 65°C.

12. Process according to any one of Claims 1 to 11, characterised by carrying out mixing of fatty matter of vegetable origin, such as sunflower oil, or of animal origin, particularly based on a hydrolysate of fish chosen from the species rich in long-chain unsaturated fatty acids.

13. Process according to any one of Claims 1 to 12, characterised in that the fast sugars and slow sugars are mixed in substantially equivalent quantities.

14. Process according to any one of Claims 1 to 13, characterised in that the fast sugars are chosen from fructose, sucrose, levulose, lactose or their mixtures, galactose being an intermediate sugar and the slow sugars are provided by starches or cereal glutens and by starchy materials.

15. Process according to any one of Claims 1 to 14, characterised in that proteins originating from other sources, such as milk proteins or milk serum proteins are added to the mixture as a supplement.

16. Process according to any one of Claims 1 to 15, characterised in that cereals such as wheat, maize or rice are also added to the mixture.

17. Preparation process according to Claims 2 to 16, characterised in that the biscuits or cakes weigh from 20 to 40 g, and particularly from 25 to 35 g.